# EUROPEAN PATENT SPECIFICATION

(11) **EP 0 577 569 B1**
(45) Date of publication and mention of the grant of the patent: **24.04.1996**
(21) Application number: 93830272.6
(22) Date of filing: 25.06.1993
(51) Int. Cl.: B65G 47/90, B08B 9/42, B08B 101/08

(54) **Pliers with movable jaws for gripping bottles or the like for mounting preferably on an automatic rinsing-sterilizing machine**
Zange mit beweglichen Backen zum Greifen von Flaschen oder dergleichen, vorzugsweise für automatische Spül-/Sterilisiermaschinen
Pince avec mâchoires mobiles pour la prise de bouteilles, préférablement pour le montage aux machines automatiques de rinçage/stérilisation

(30) Priority: 30.06.1992 IT PD920080 U
(43) Date of publication of application: 05.01.1994
(73) Proprietor: OFFICINE AVE S.p.A., I-30030 Maerne, Venezia (IT)
(72) Inventor: Pusineri, Luca, I-30030 Favaro Veneto (IT)
(74) Representative: Sarpi, Maurizio

(56) References cited:
- WO-A-91/15309

## Description

The present patent relates to pliers with movable jaws for gripping bottles, vases or the like, in glass, ceramic, plastic material or other.

The subject pliers permit the aforesaid containers to be gripped and moved during the washing, rinsing or sterilizing operations which are carried out by automatic or semiautomatic, carrousel or linear machines.

The prior art provides particular automatic machines for washing, rinsing and/or sterilizing bottles or the like. Such automatic machines comprise bottle gripping devices which move the bottles according to a fixed course in which the bottles are, in general, overturned so that their mouth-pieces are positioned over nozzles which deliver the treating substances such as water, disinfectants, air, gas or other.

The known gripping devices are carried out according to a few patterns which comprise, in general, pliers which consist of a pair of pivoted jaws which grip the bottle-neck through the action of means which may provoke both the clamping and the opening of the jaws.

The opening and closing movements of the jaws may be carried out through pushing devices which cause the displacement of control parts for the jaws. Such devices are arranged behind the pivot and may be pins which slide within inclined slots or leverages or the like, such as in WO-A-9 115 309.

The pivots or the levers are commonly controlled by cams or other pushing devices which act on a rod or a slide assembly, during the clamping or release phases.

The main inconveniences found in the known gripping pliers refer on the one hand to the difficulty of controlling and adjusting the sliding pivots in the slots of the jaws since the slots, although shaped, do not permit a perfect clamping of the bottle if the opening capacity is to be safeguarded, and on the other hand there is the difficulty of a limited mobility and practicalness of the lever controls which are difficult to be carried out and do not permit to reach wide openings for large-diameter containers.

The present invention removes the aforesaid inconveniences and other consequent ones since the subject pliers are provided with new moving elements which offer a double possibility. In fact, on the one hand such moving elements permit the pliers to be opened till reaching a large width so that it is possible for the pliers to grip also bottles or vases having long diameters. On the other hand such moving elements permit an effective returning action of the jaws so as to obtain a stronger grip than any other pliers without affecting the opening capacity.

Within the sphere of the above-described general object, the pliers in question are provided with jaws which are moved symmetrically by opening and closing members acting on the extensions of the jaws, such extensions being cam-shaped and arranged behind the pins. The form and direction of the cam-shaped parts may be varied according to whatever angle based on the wished opening of the jaws.

The peculiarity of the pliers according to the present invention is that the direction of the inner sides of the cam-shaped extensions can be nearly parallel to the thrust line, the closing thrust being interposed between such inner sides, and therefore the returning action of the jaws may reach a very high force which is necessary for an effective grip of the bottles.

In fact, the invention refers to pliers with movable jaws for gripping bottles or the like for mounting preferably on automatic, carrousel or linear, rinsing or sterilizing machines, characterized by the fact that both jaws are pivoted upon a jaws supporting assembly and show an extension which is arranged behind the pin, such extension being cam-shaped with curvilinear or linear sloping parts with variable angles; the cam-shaped extension of each jaw is intercepted by pairs of pins which are arranged two by two on a thrust and/or draw sliding block which is arranged against a preloaded spring which is placed on a shaft which is secured to the sliding block and is placed between the jaws and the jaws supporting assembly; the thrust and draw action is accomplished by the pins of the sliding block on the cam-shaped extensions of the jaws and provokes the opening and closing of the jaws through the intervention of usual thrust means acting on the sliding block itself; the cam-shaped extensions of the jaws may show whatever angle according to the wished opening capacity and clamping force.

The invention will be comprised better from the following specification with reference to the accompanying drawings which represent a preferred embodyment wherein:

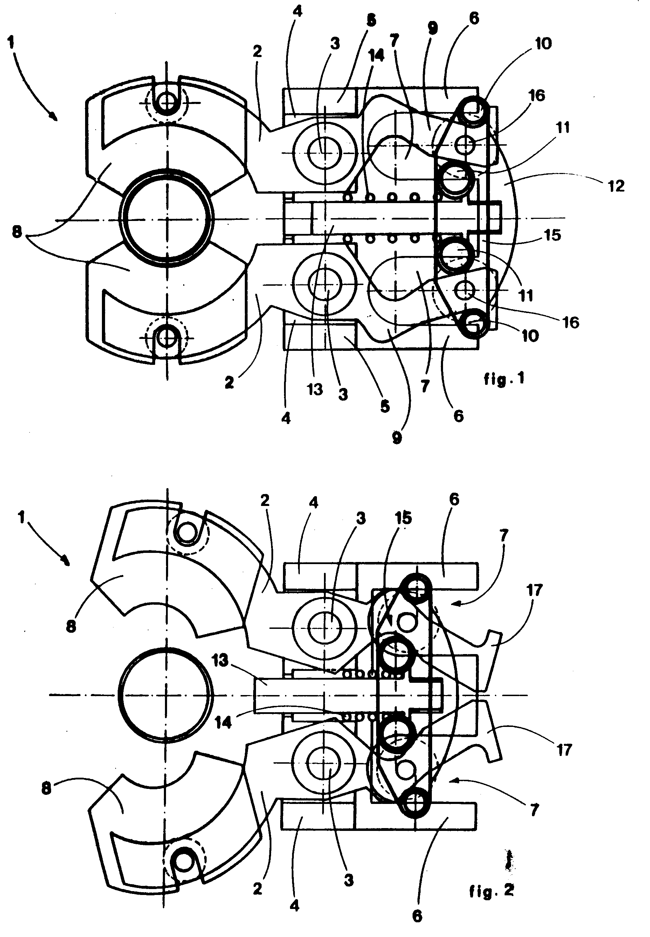

Fig. 1 shows a schematic plan view of the pliers according to the present invention as a whole and in close position;
Fig. 2 shows a corresponding schematic view but in open position;
Fig. 3 shows a schematic side view of the pliers in question;
Fig. 4 shows a schematic view of a detail of a jaw; and
Fig. 5 shows a schematic view of the pliers in which the jaws supporting part is in evidence.

With reference to the accompanying drawings, in general number 1 denotes pliers for gripping bottles or the like for mounting preferably on an automatic, carrousel or linear, rinsing-sterilizing machine.

Essentially, such pliers consist of two jaws 2 which may be moved symmetrically on pins 3. The jaws 2 are symmetrical and each other's mirror image.

The pins 3 of the jaws are secured to an L-shaped bracket 4 which comprises arms 5. The arms 5 are used to mount a jaws supporting assembly on the fixed part of the machine. The bracket 4 is also provided with appendixes 6 which form parallel cavities 7 the function of which will be described below.

The fore ends of the jaws get out from the bracket 4 and are shaped like semicircles. The fore ends of the jaws are provided with conventional pads 8 for gripping the bottle-necks.

The rear parts of the jaws, such parts being arranged behind the pins 3, form cam-shaped extensions 9 which are intercepted by the members which control the opening and clamping of the jaws.

The cam-shaped extensions 9 are in fact included between pairs of pins 10 and 11 which are fixed to a central sliding block 12 which may slide between the extensions 9 and the appendixes 6 of the bracket 4.

The sliding block 12 slides axially along a hypothetical center line between both jaws on a shaft 13 and is kept in a pushing position towards the outside of the bracket 4 by means of a preloaded spring which is arranged on the shaft 13 itself.

As already said, the pins 10 and 11 are fixed on the sliding block 12.

The cam-shaped extensions 9 are intercepted by the pins laterally and are also kept by an upper closing plate 15.

Moreover, the sliding block 12 is guided in its thrust and draw movements by guide rolls 16 which slide along the previously mentioned parallel cavities 7 of the bracket 4.

The cam-shaped extensions 9 are so shaped that during the advancing motion of the sliding block the outer pins 10 push on the outer side of both cam-shaped extensions in order to provoke the opening of the jaws whereas in the phase of return of the sliding block the inner pins 11 push on the inner side of both cam-shaped extensions in order to provoke the closing of the jaws.

As concerns the opening capacity of the jaws and the clamp force of the jaws on the bottleneck, the shape of the extensions is very important since it is possible to reach more or less wide openings of the jaws by varying the angle of the outer side of the cam extensions while the shape of the inner side of the cam extensions determines the force with which the jaws grip the bottleneck.

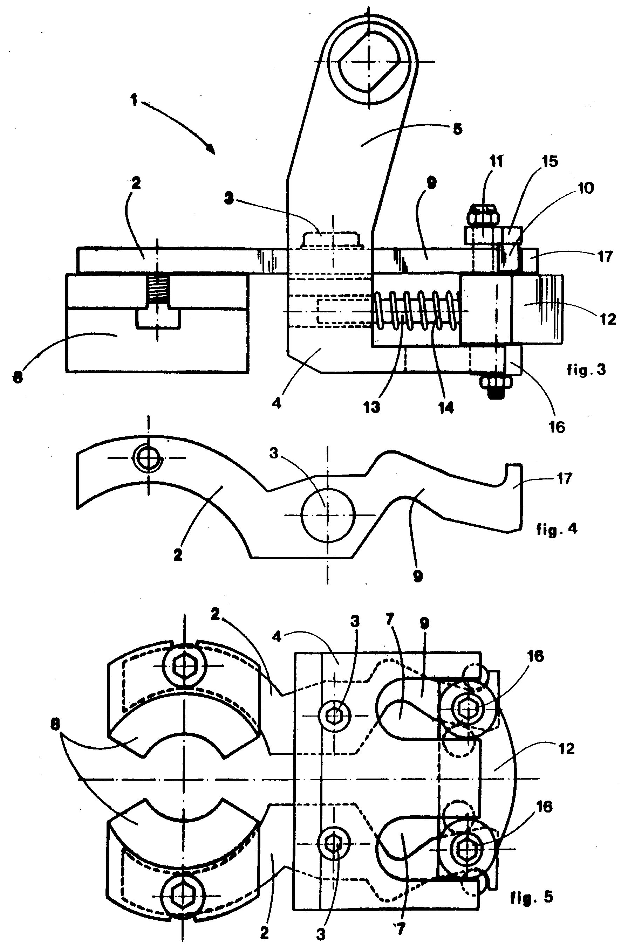

The preferred shape of the jaws 2 with their respective cam extensions 9 is shown in Fig. 4 where it can be seen that the outer side of the cam-shaped extension 9 has a slightly curved profile with the angle with respect to the slide middle axis of the sliding block 12 increasing towards the gripping end of the jaw whereas the inner side has a discontinue profile with a very angled initial sector close to the gripping end and a final sector which is nearly parallel to the slide middle axis of the sliding block, when the jaws are in their gripping position.

The aforesaid measures permit that the first sector of the inner side of the cam-shaped extension provokes the clamping of the jaw when the inner pins 11 are retracted while the second sector, which is less sloping, facilitates and completes the clamping of the bottleneck and prevents the jaw from partially releasing the bottleneck during the displacements of the bottles, such displacements being often rapid.

Accordingly, it is evident that a change of the angle and direction of the cam-shaped extension 9 involves also a change in the movements which the jaw makes during the displacements of the pins 10 and 11 together with the sliding block on which such pins are mounted.

Finally, the end part of bothcam-shaped extensions is provided with a stop tooth 17 which determines the maximum retracting point for the outer pins 10 and the whole sliding part of the sliding block 12.

The onward movement of the sliding block for provoking the opening of the jaws is caused by a known thrust device such as a cam or other while the backward movement of the sliding block is provoked by a preloaded spring 14 which is arranged on the slide shaft 13 of the sliding block itself.

The gripping pliers according to the present invention have been described and represented according to a preferred solution but variants may be provided within the range of protection of the claims.

## Claims

1. Pliers with movable jaws for gripping bottles or the like for mounting preferably on automatic, carrousel or linear, rinsing-sterilizing machines, wherein both jaws (2), which are pivoted around pins (3) on a supporting bracket (4), are provided with an extension (9) which is arranged behind a pin (3), and wherein a thrust and/or draw sliding block (12) is provided, which can be displaced against the force of a preloaded spring (14) to provoke opening of the jaws, characterized in that each extension (9) is shaped essentially like a cam with inclined, curved or linear parts, the angle being variable; the cam-shaped extension (9) of each jaw (2) is intercepted by a pair of pins (10, 11), of which one pin (10) is arranged on the outer side of the extension (9) and the other pin (11) on the inner side of the extension (9); the pairs of pins (10, 11) are coupled two by two on said sliding block (12) and said spring (14) is provided on a slide shaft (13) which is fixed to the sliding block (12).

2. Pliers as claimed in claim 1, characterized in that the sliding block (12) is arranged between the rear extensions (9) of the jaws (2) and the supporting bracket (4) and is guided in its thrust and draw motions by means of rolls (16) or the like which can slide along parallel cavities (7) provided in the supporting bracket (4).

3. Pliers as claimed in the foregoing claims, characterized in that the thrust and draw action carried out by the pins (10, 11) of the sliding block (12) on the cam-shaped extensions (9) of the jaws (2) causes the opening and closing, respectively, of the jaws (2) through the intervention of thrust means acting on the sliding block (12).

4. Pliers as claimed in the foregoing claims, characterized in that the cam-shaped extensions (9) of the jaws (2) may show any angles according to the wished opening capacity and to the wished clamp force.

5. Pliers as claimed in the foregoing claims, characterized in that the shape of the cam-extensions (9) is such that the outer pins (10) push on the outer sides of the cam-shaped extensions during the advancing motion of the sliding block (12) so as to determine the opening of the jaws (2) while the inner pins (11) push on the inner sides of the cam-shaped extensions (9) during the phase of return of the sliding block (12) so as to determine the clamp of the jaws (2).

6. Pliers as claimed in the foregoing claims, characterized in that the preferred shape of the cam-shaped extensions (9) is such that the outer sides of the extensions (9) have a slightly curved profile with the angle with respect to the slide middle axis of the sliding block (12) increasing towards the gripping parts of the jaws while the inner sides have a discontinue profile, the initial sector, close to the gripping parts of the jaws, being very angled and the final sector being nearly parallel to said slide middle axis, when the jaws are in their gripping position.

7. Pliers as claimed in the foregoing claims, characterized by the fact that the final part of the cam-shaped extensions (9) is provided with a stop tooth (17) which determines the maximum retracting point for the outer pins (10) and for the whole sliding part of the sliding block (12).

## Patentansprüche

1. Zange mit beweglichen Backen zum Greifen von Flaschen oder dergleichen, zum Anbringen vorzugsweise an automatische, kreiförmige oder lineare Spül-Sterilisations-Maschinen, wobei die beiden Backen (2), die um Stifte (3) an einem Halter (4) angelenkt sind, mit einem Ansatz (9) versehen sind, der hinter einem Stift (3) angeordnet ist, und wobei ein Drück- und/oder Zug-Gleitblock (12) versehen ist, der gegen die Kraft einer vorgespannten Feder (14) verschiebbar ist, um die Öffnung der Backen hervorzurufen, dadurch gekennzeichnet, daß jeder Ansatz (9) im wesentlichen wie ein Nockenkörper mit geneigten, gebogenen oder linearen Abschnitten gestaltet ist, wobei der Winkel variabel sein kann, daß an dem nockenförmigen Ansatz (9) eines jeden Backens (2) ein Paar von Stiften (10, 11) angreift, wobei der eine Stift (10) auf der Außenseite des Ansatzes (9) und der andere Stift (11) auf der Innenseite des Ansatzes (9) angeordnet ist, daß die Stifte (10, 11) paarweise auf dem besagten Drück- und/oder Zug-Gleitblock (12) gekoppelt sind, und daß die besagte Feder (14) auf einem Gleitschaft (13) vorgesehen ist, der an den Gleitblock (12) befestigt ist.

2. Zange gemäß Anspruch 1, dadurch gekennzeichnet, daß der Gleitblock (12) zwischen der rückseitigen Ansätzen (9) der Backen (2) und dem Halter (4) angeordnet ist und bei seinen Drück- und Ziehbewegungen durch Rollen (16) oder dergleichen geführt ist, die entlang paralleler Ausnehmungen (7) gleiten können, die in dem Halter (4) ausgebildet sind.

3. Zange gemäß den vorausgehenden Ansprüchen, dadurch gekennzeichnet, daß die Drück- und Zugaktion, die von der Stiften (10, 11) des Gleitblockes (12) auf die nockenförmigen Ansätze (9) der Backen (2) ausgeübt wird, durch das Einwirken von den Gleitblock (12) beaufschlagenden Beaufschlagungsmitteln das jeweilige Öffnen und Schließen der Backen (2) verursacht.

4. Zange gemäß den vorausgehenden Ansprüchen, dadurch gekennzeichnet, daß die nockenähnlich geformten Ansätze (9) der Backen (2) entsprechend dem gewünschten Öffnungsvermögen und der gewünschten Klemmkraft jegliche Winkel aufweisen können.

5. Zange gemäß den vorausgehenden Ansprüchen, dadurch gekennzeichnet, daß die Nocken-Ansätze (9) eine derartige Gastalt haben, daß die äußeren Stifte (10) während der Vorwärtsbewegung des Gleitblockes (12) auf die Außenseiten der nockenartig geformten Ansätze drücken, um das Öffnen der Backen (2) zu bewirken, wohingegen die inneren Stifte (11) während der Rückkehrphase des Gleitblockes (12) auf die Innenseiten der nockenartig geformten Ansätze (9) drücken, um das Klemmen der Backen (2) zu bewirken.

6. Zange gemäß den vorausgehenden Ansprüchen, dadurch gekennzeichnet, daß die bevorzugte Gestalt der nockenförmig gestalteten Ansätze (9) derart ist, daß die Außenseiten der Ansätzen ein leicht kurvonförmiges Profil mit dem ansteigenden Winkel in bezug auf die Gleitmittelachse des Gleitblockes (12) in Richtung zu den Greifabschnitten der Backen aufweisen, während die Innenseiten ein diskontinuierliches Profil haben, wobei der Anfangsabschnitt in der Nähe der Greifabschnitten der Backen stark angewinkelt und der Endabschnitt nahezu parallel zur besagten Gleitmittelachse ist, wann die Backen in ihren Greifposition sind.

7. Zange gemäß den vorausgehenden Ansprüchen, dadurch gekennzeichnet, daß der Endabschnitt der nockenförmigen Ansätze (9) mit einem Anschlagzahn (17) versehen ist, der den maximalen Rückzugspunkt für die äußeren Stifte (10) und für den gesamten Gleitteil des Gleitblockes (12) bestimmt.

## Revendications

1. Pince pourvue de mâchoires mobiles adaptée pour saisir des bouteilles su objets de ce genre et pour être montée, de préférance sur des machines automatiques de rinçage-stérilisation, costituées sous forme circulaire ou linéaire, ce pince ayant les deux mâchoires (2) qui sont montés autour aux pivots (3) sur une console de support (4), ces machoirs sont pourvues d'un prolongement (9) disposé en arrière d'un pivot (3), et dans lequel est pourvu un bloc coulissant de poussée et/ou de traction (12) et qui peut être déplacé contre la force d'un ressort soumis à une précontrainte (14) pour provoquer l'ouverture des machoirs, caracterisée par le fait que chaque prolongement (9) est conformé en forme de came comportant des parties inclinées, courbes ou droites, sous un angle variable; le prolongement en forme de came (9) de chaque machoir (2) est encadré par deux goujons (10, 11), un goujon (10) étant situé extérieurement à ce prolongement (9) et l'autre goujon (11) étant situé intérieurement à ce prolongement (9); les couples de goujons (10, 11) sont couplés deux par deux sur le bloc coulissant (12), et dite ressort (14) étant engagé sur un arbre de coulissement (13) qui est fixé sur le bloc coulissant (12).

2. Pince selon la revendication 1, caracterisée par le fait que le bloc coulissant (12) est située entre les prolongements arrière (9) des mâchoires (2) et la console de support (4) et est guidé dans ses mouvements en poussé et en traction au moyen de galets (16) ou éléments semblables qui peuvent glisser le long d'évidements parallèles (7) qui sont prévus dans la console de support (4).

3. Pince selon l'une ou l'autre des revendications 1 ou 2, caracterisée par le fait que l'action de poussée et de traction exercée par les goujons (10, 11) du bloc coulissant (12) sur le prolongement (9) en forme de came des mâchoires (2) êntraine, respectivement, l'ouverture et la fermeture de ces mâchoires (2) en faisant intervenir des moyens de poussée qui agissent sur le bloc coulissant (12).

4. Pince selon l'une quelconque des revendications 1 à 3, caracterisée par le fait que les prolongements (9) en forme de came des mâchoires (2) peuvent comporter toutes sortes d'angles selon la capacité d'ouverture et de la force de serrage que l'on souhaite obtenir.

5. Pince selon l'une quelconque des revendications 1 à 4, caracterisée par le fait que la forme des prolongements en forme de came (9) est adaptée de maniere que les goujons externes (10) poussent sur les côtés extérieurs des prolongements en forme de came pendant le mouvement d'avancement du bloc coulissant (12) de manier à déterminer l'ouverture des mâchoires (2) tandis que les goujons internes (11) poussent sur les côtes intérieurs des prolongements (9) en forme de came pendant le mouvement de retour du bloc coulissant (12) de manière à déterminer le serrage des mâchoires (2).

6. Pince selon l'une quelconque des revendications 1 à 5, caracterisée par le fait que la forme préférée des prolongements (9) en forme de came est telle que les côtés extérieurs de ces prolongements (9) ont un profil légèrement incurvé avec l'angle en relation à l'axe central de coulissement du bloc coulissant (12) augmentant vers les parties de préhension des mâchoires tandis que les côtés intérieurs présentent un profil brisé, le secteur initial, près de parties de préhension des machoirs, étant très angulaire et le secteur final étant pratiquement parallèle à l'axe central de coulissement, quand les mâchoires sont dans leur position de préhension.

7. Pince selon l'une quelconque des revendications 1 à 6, caracterisée par le fait que le secteur final des prolongements (9) en forme de came est pourvu d'un dent d'arrêt (17) qui détermine le point de recul maximal pour les goujons externes (10) et pour toute la partie coulissante du bloc coulissant (12).
